# EUROPÄISCHE PATENTSCHRIFT

(11) **EP 3 710 647 B1**
(45) Veröffentlichungstag und Bekanntmachung des Hinweises auf die Patenterteilung: **28.10.2026**
(21) Anmeldenummer: 18808239.0
(22) Anmeldetag: 13.11.2018
(51) Int. Cl.: E04D 13/072, E04D 13/064, E04F 17/00

(54) **VERBUNDELEMENT FÜR DEN HOCHBAU ODER TIEFBAU**
COMPOSITE ELEMENT FOR BUILDING CONSTRUCTION AND CIVIL ENGINEERING
ÉLÉMENT COMPOSITE POUR LA CONSTRUCTION DE BATIMENTS OU LE GÉNIE CIVIL

(30) Priorität: 17.11.2017 DE 102017127185
(43) Veröffentlichungstag der Anmeldung: 23.09.2020
(73) Patentinhaber: ACO Ahlmann SE & Co. KG, 24782 Büdelsdorf (DE)
(72) Erfinder: MEIER, Stephan, 25767 Albersdorf (DE); SCHÜMANN-HAMMERMANN, Christian Philip, 24113 Kiel (DE)
(74) Vertreter: Meissner Bolte Partnerschaft mbB
(86) Internationale Anmeldenummer: PCT/EP2018/081064
(87) Internationale Veröffentlichungsnummer: WO 2019/096779

(56) Entgegenhaltungen:
- EP-A1- 0 967 347
- EP-A2- 0 908 573
- WO-A1-01/55527
- WO-A2-2015/144794
- FR-A5- 2 203 405
- US-A- 3 916 756
- US-A1- 2011 191 990
- US-B1- 6 629 335

## Beschreibung

Die Erfindung betrifft ein Verbundelement für den Hochbau oder Tiefbau. Ferner wird eine Verwendung von einem als Klemmelement ausgebildeten Befestigungselement beschrieben.

WO01/55527A1 offenbart ein Verbundelement gemäß dem Oberbegriff des Anspruchs 1.

Der Erfindung liegt die Aufgabe zugrunde, ein Verbundelement für den Hochbau oder Tiefbau anzugeben, bei dem eine stabile Verbindung zwischen branchentypischen Bauteilen unter geringem Aufwand erzielt werden kann.

Diese Aufgabe wird erfindungsgemäß durch ein Verbundelement mit den Merkmalen des Anspruchs 1 gelöst.

Die Erfindung beruht auf dem Gedanken, ein Verbundelement für den Hochbau oder Tiefbau anzugeben, dass wenigstens zwei Bauteile und wenigstens ein Befestigungselement zur Verbindung der Bauteile umfasst. Ein erstes Bauteil weist wenigstens einen, insbesondere zylinderförmigen, Montagedorn auf. Das Befestigungselement ist als Klemmelement ausgebildet, derart, dass es mit dem Montagedorn kraftschlüssig verbindbar ist.

Im Rahmen der Anmeldung sind denkbare Anwendungen für das erfindungsgemäße Verbundelement vorzugsweise im Bereich der Lichtschachtbefestigung, Befestigungen für Lichtschachtzubehör, Verriegelungselemente, Befestigungen für Dichtungen oder Dämpfungen bei Lichtschächten oder Entwässerungsvorrichtungen, Fügevorgänge bei Entwässerungsvorrichtungen, Befestigungen für Entwässerungsrinnen, Verbindungen von Zargen beispielsweise bei Hofabläufen, Schuhabstreifern oder Rinnen oder auch in Abscheidern und Schächten.

Die Erfindung hat den Vorteil, dass mittels der Klemmverbindung des Klemmelementes eine kostengünstige Herstellung und eine einfache Justierbarkeit des Verbundelementes ermöglicht werden kann. Die Verbindung zwischen zwei oder mehr branchentypischen Bauteilen lässt sich daher beispielsweise im Vergleich zum Verschweißen oder Eingießen sehr einfach realisieren. Es kann demnach auf einen aufwendigen Formenbau und eine zeitintensive Fertigung verzichtet werden. Mit dem Klemmelement wird eine unerwünschte Bewegbarkeit bzw. Verschiebung der Bauteile relativ zueinander zuverlässig durch einen Kraftschluss verhindert, wobei die Anbringung des Klemmelementes dabei gleichzeitig flexibel an einer beliebigen Stelle des Bauteiles erfolgen kann. Weitere bevorzugte Ausführungsformen der Erfindung sind in den Unteransprüchen angegeben.

Erfindungsgemäß ist das Befestigungselement als Klemmscheibe, insbesondere als Achsenklemmring, mit einer zentralen Ausnehmung zur Aufnahme des Montagedorns und mehreren Klemmkrallen ausgebildet, wobei die Klemmkrallen im an den Montagedorn angebrachten Zustand einen Winkel zu einer Ebene der Klemmscheibe aufweisen. Dadurch kann eine Verkrallung, bzw. eine unlösbare Verklemmung gewährleistet werden. Generell kann die Anzahl, Anordnung und Geometrie der einzelnen Klemmkrallen der Klemmscheibe bzw. des Klemmelementes variieren. Insbesondere Achsenklemmringe weisen eine gleichbleibende Klemmwirkung mit hohen Haltekräften auf und sind gleichzeitig einfach zu montieren. Die Klemmscheibe ist vorteilhafterweise nach der Anbringung unlösbar mit den Bauteilen verbunden, da die Verbindung nur durch eine Deformation gelöst werden kann.

Vorzugsweise ist eine Geometrie des Befestigungselementes an eine zugehörige Geometrie des Montagedorns angepasst. Insbesondere kann das Befestigungselement runde, ovale oder krallenartige Geometrien aufweisen.

Vorteilhafterweise weist ein erstes Bauteil einen Polymerbeton und ein zweites Bauteil ein Metall, insbesondere Stahl oder Guss, auf. Es sind generell weitere Materialien denkbar, wie beispielsweise Kunststoff oder Zementbeton, Metalle, Gusswerkstoffe etc.. Denkbar sind auch Kombinationen von unterschiedlichen Werkstoffen, z.B. Beton/Polymerbeton, Metall/Kunststoff, Kunststoff/Beton etc..

Beispielhaft kann das Klemmelement an Stirnwände von Entwässerungsrinnen angebracht werden. Insbesondere kann eine Stirnwand der Rinne als erstes Bauteil aus Polymerbeton gebildet sein. Die Stirnwand weist dabei mehrere Montagedorne, bzw. zylinderförmige Erhebungen auf. Die Montagedorne korrespondieren in ihrer geometrischen Form zu den Klemmelementen, insbesondere den Klemmringen. Mittels der Klemmelemente lassen sich vorzugsweise Klammern, insbesondere Stahlklammern, als zweites Bauteil an der Stirnwand befestigen. Dadurch kann eine einfache und schnelle Verbindung zwischen den Bauteilen hergestellt werden. Es kann vorteilhafterweise auf eine zusätzliche aufwendige Verklebung oder andere Verbindungsart verzichtet werden. Für eine sichere Verbindung können vorzugsweise mehrere Klemmelemente für mehrere Klammern verwendet werden.

In einer weiteren Ausführungsform ist ein erstes Bauteil als Rinnenkörper und ein zweites Bauteil als Abdeckung oder Zarge für eine Entwässerungsvorrichtung ausgebildet. Des Weiteren ist es möglich, eine Zarge einer Entwässerungsrinne mit einem Rost über das Befestigungselement zu verbinden.

In einer weiteren Ausführungsform ist ein erstes Bauteil als Lichtschachtkörper und ein zweites Bauteil als Abdeckung oder Zarge für einen Lichtschacht ausgebildet.

Vorzugsweise ist das Befestigungselement in wenigstens ein Bauteil integrierbar. Dabei kann das Wirkprinzip der Klemmelemente in eines oder mehrere der zu verbindenden Bauteile übertragen werden. In diesem Fall kann beispielsweise von einer zylindrischen Form des zugehörigen Montagedorns abgewichen werden. Die Integration des Wirkprinzips reduziert vorteilhafterweise die benötigte Gesamtanzahl der Bauteile. Insbesondere kann sich die Integration des Wirkprinzips auf eine Vielzahl an branchentypischen Bauteilen, wie beispielsweise Kunststoffriegel auf einen Gussrost oder Metall und Metall, übertragen lassen.

In einer besonders bevorzugten Ausführungsform ist das Befestigungselement derart an den Bauteilen angeordnet, dass eine an einem ersten Bauteil angebrachte Dichtung, insbesondere aus einem elastischen Material, fixierbar ist. Beispielhaft kann das erste Bauteil eine Stirnwand einer Polymerbetonrinne umfassen. An der Stirnwand kann eine Stahlklammer angebracht sein und mittels einem als Klemmelement ausgebildeten Befestigungselement an der Stirnwand verbunden sein. Bevorzugt kann an einer gegenüberliegenden Seite der Stirnwand eine Dichtung angebracht sein. Die Dichtung weist ein elastisches Material, insbesondere Moosgummi bzw. EPDM-Schaum auf. Mit anderen Worten bildet die Dichtung eine Beschichtung der gegenüberliegenden Seite der Stirnwand. Mittels der Klammer und der Dichtung kann sichergestellt werden, dass die Stirnwand beispielhaft fluiddicht an eine sich anschließende Entwässerungsrinne angeschlossen werden kann. Dabei kann auch vorteilhaft die Dichtung mittels der Klammer über das Klemmelement sicher fixiert werden. Es kann somit auf einen zusätzlichen Klebevorgang der Dichtung an die gegenüberliegende Seite der Stirnwand verzichtet werden. Besonders vorteilhafterweise kann die Dichtung auf der zu verbindenden Seite von den chemischen Inhaltsstoffen des Polymerbetons, z.B. Styrol, angelöst werden und so eine sichere Verbindung von Dichtung und Polymerbeton ohne zusätzliche Klebstoffe ermöglichen. Denkbar ist aber auch die Dichtung, z.B. der Moosgummi, mittels einer oder mehrerer erfindungsgemäßer Klemmringe an dem jeweiligen Bauteil, insbesondere Polymerbetonkörper, zu befestigen.

Eine Verwendung von einem als Klemmelement ausgebildeten Befestigungselement zur Verbindung von wenigstens zwei Bauteilen für Hochbau, insbesondere Lichtschächte, oder Tiefbau, insbesondere Entwässerungsvorrichtungen, ist möglich.

Darüber hinaus kann die Verwendung des Befestigungselementes alternativ oder zusätzlich einzelne oder eine Kombination mehrerer zuvor in Bezug auf das Verbundelement genannte Merkmale aufweisen.

Die Erfindung wird nachstehend mit weiteren Einzelheiten unter Bezug auf die beigefügten schematischen Zeichnungen näher erläutert. Die dargestellten Ausführungsformen stellen lediglich Beispiele dar, wie die erfindungsgemäße Vorrichtung ausgestaltet sein kann und stellen keine abschließende Begrenzung dar. Darin zeigen
- Fig. 1: eine perspektivische Ansicht eines erfindungsgemäßen Verbundelementes mit einer Schnittansicht eines Befestigungselementes nach einem ersten Ausführungsbeispiel;
- Fig. 2: eine perspektivische Ansicht des Verbundelementes gemäß Fig. 1.

In der nachfolgenden Beschreibung werden für gleiche und gleichwirkende Teile dieselben Bezugszeichen verwendet.

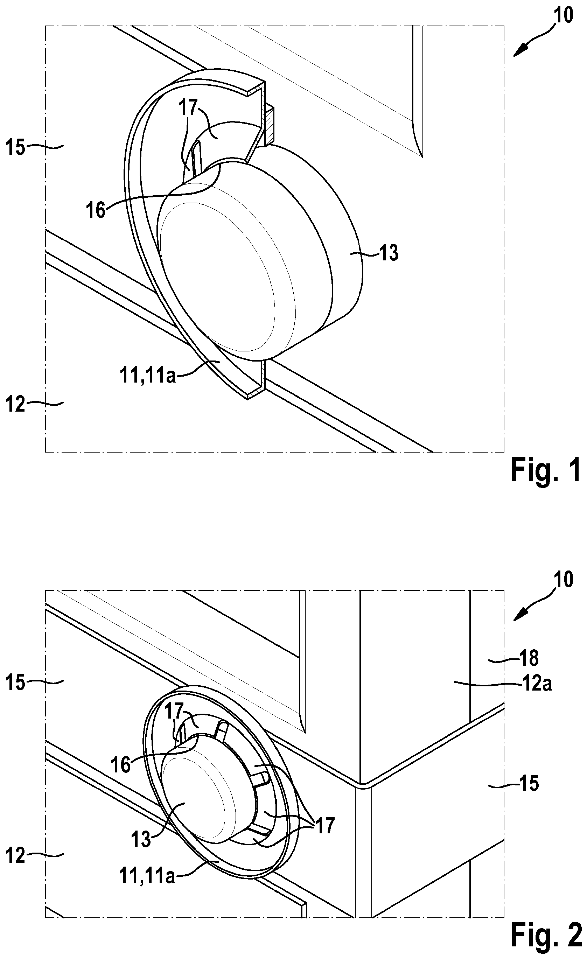

Fig. 1 zeigt eine perspektivische Ansicht eines erfindungsgemäßen Verbundelementes 10 mit einer Schnittansicht eines Befestigungselementes 11 nach einem ersten Ausführungsbeispiel. Das Verbundelement 10 weist zwei Bauteile und ein Befestigungselement 11 auf. Das erste Bauteil umfasst eine Stirnwand 12 einer Entwässerungsrinne. Insbesondere ist die Stirnwand 12 aus Polymerbeton gebildet. Die Stirnwand 12 weist einen zylinderförmigen Montagedorn 13 auf. Mit anderen Worten ist der Montagedorn 13 als zylinderförmige Erhebung an der Stirnwand 12 ausgebildet. Der Montagedorn 13 steht senkrecht von der Stirnwand 12 hervor.

Das zweite Bauteil ist als Stahlklammer 15 ausgebildet. Die Stahlklammer 15 bildet eine Art flächigen Rahmen um die Stirnwand 12. Zur Verbindung der Stahlklammer 15 mit der Stirnwand 12 weist die Stahlklammer 15 eine dem Montagedorn 13 korrespondierende Ausnehmung auf, derart, dass sie in vollständigen Kontakt zu der Stirnwand 12 gebracht werden kann. Anders gesagt liegt die Stahlklammer 15 vollständig an der Stirnwand 12 an.

Zur Fixierung der Stahlklammer 15 an die Stirnwand 12, wird das Befestigungselement 11 auf den Montagedorn 13 angebracht. Das Befestigungselement 11 ist als Klemmscheibe 11a bzw. als Klemmelement ausgebildet. Insbesondere ist das Befestigungselement 11 als Achsenklemmring ausgebildet. Der Achsenklemmring weist eine zentrale Ausnehmung 16 auf. Die zentrale Ausnehmung 16 korrespondiert in ihrer geometrischen Form der geometrischen Form des zylinderförmigen Montagedorns 13. Beispielhaft weist die zentrale Ausnehmung 16 eine runde Form auf. Die zentrale Ausnehmung 16 dient der Aufnahme des Montagedorns 13.

Weiterhin weist die Klemmscheibe 11a beispielhaft mehrere Klemmkrallen 17 auf. Im an den Montagedorn 13 angebrachten Zustand weisen die Klemmkrallen 17 einen Winkel zu einer Ebene der Klemmscheibe 11a auf. Mit anderen Worten stehen die Klemmkrallen 17 von der Klemmscheibe 11a hervor. Die Klemmscheibe 11a bzw. das Klemmelement ist mit dem Montagedorn 13 im angebrachten Zustand kraftschlüssig verbunden. Es ist daher nicht möglich, die Klemmscheibe 11a zerstörungsfrei von dem Montagedorn 13 zu lösen. Mittels der Klemmscheibe 11a wird die Stahlklammer 15 gegen die Stirnwand 12 gedrückt. Die Stahlklammer 15 ist daher zwischen der Klemmscheibe 11a und der Stirnwand 12 angeordnet. Es ist mittels der Klemmscheibe 11a eine sichere und unlösbare Verbindung zwischen der Stahlklammer 15 und der Stirnwand 12 realisiert.

Fig. 2 zeigt eine perspektivische Ansicht des Verbundelementes 10 gemäß Fig. 1. Der Aufbau des Verbundelementes 10 ist analog zu Fig. 1. Im Gegensatz zu Fig. 1 ist an einer gegenüberliegenden Seite 12a der Stirnwand 12 ein elastisches Material für eine Dichtung angebracht. Insbesondere ist das elastische Material als Moosgummi 18 / EPDM-Schaum ausgebildet. Das Moosgummi 18 ist zwischen der gegenüberliegenden Seite 12a der Stirnwand 12 und der Stahlklammer 15 angeordnet. Daher ist das Moosgummi 18 an der gegenüberliegenden Seite 12a der Stirnwand 12 fixiert. Mit anderen Worten bildet der Moosgummi 18, bzw. die Dichtung eine Beschichtung der gegenüberliegenden Seite 12a der Stirnwand 12. Mittels der Stahlklammer 15 und dem Moosgummi 18 kann sichergestellt werden, dass die gegenüberliegende Seite 12a der Stirnwand 12 fluiddicht an eine sich anschließende Entwässerungsrinne angeschlossen werden kann. Es kann generell auf einen zusätzlichen Klebevorgang des Moosgummi 18 an die gegenüberliegende Seite 12a der Stirnwand 12 verzichtet werden.

Das Moosgummi 18 kann, wenn es in Kontakt mit dem Polymerbeton der gegenüberliegenden Seite 12a der Stirnwand 12 gelangt, an der Oberfläche der gegenüberliegenden Seite 12a angelöst werden und mit dem Polymerbeton verbunden werden. Dabei ist bereits eine zerstörungsfreie Trennung des Moosgummis 18 von der gegenüberliegenden Seite 12a erschwert, wodurch das Moosgummi 18 verliersicher an der gegenüberliegenden Seite 12a der Stirnwand 12 angebracht ist.

Ferner kann die Stahlklammer 15 an ihren Enden Rastelemente, insbesondere Rasthaken aufweisen, die in entsprechenden Ausnehmungen in einer Entwässerungsrinnenseitenwand eingreifen. Somit kann das Moosgummi 18 fluiddicht an die gegenüberliegende Seite 12a der Stirnwand 12 angedrückt, bzw. verpresst sein.

Es ist auch denkbar, das Moosgummi 18 nur abschnittsweise auf Bereiche aufzubringen, die abgedichtet werden sollen oder bei denen z.B. ein Klappern durch Moosgummidämpfung verhindert werden soll. Auch Rinnenstöße untereinander können so abgedichtet werden. Vorteilhafterweise kann mit dem Moosgummi 18 auch eine Rutschsicherung gegen unerwünschte Relativbewegungen erzielt werden.

### Bezugszeichenliste

- 10: Verbundelement
- 11: Befestigungselement
- 11a: Klemmscheibe
- 12: Stirnwand
- 12a: gegenüberliegende Seite
- 13: Montagedorn
- 15: Stahlklammer
- 16: zentrale Ausnehmung
- 17: Klemmkralle
- 18: Moosgummi

## Patentansprüche

1. Verbundelement (10) für das Bauwesen, insbesondere den Hochbau oder Tiefbau, umfassend wenigstens zwei Bauteile und wenigstens ein Befestigungselement (11) zur Verbindung der Bauteile, wobei ein erstes Bauteil wenigstens einen, insbesondere zylinderförmigen, Montagedorn (13) aufweist, und das Befestigungselement (11) als Klemmelement ausgebildet ist, derart, dass es mit dem Montagedorn (13) kraftschlüssig verbindbar ist,
**dadurch gekennzeichnet, dass**
das erste Bauteil aus Polymerbeton oder Beton, insbesondere Zementbeton, und ein zweites Bauteil aus Metall, insbesondere Stahl, gebildet ist, wobei das Befestigungselement (11) als Klemmscheibe (11a), insbesondere als Achsenklemmring, mit einer zentralen Ausnehmung (16) zur Aufnahme des Montagedorns (13) und mehreren Klemmkrallen (17) ausgebildet ist, wobei die Klemmkrallen (17) im an den Montagedorn (13) angebrachten Zustand einen Winkel zu einer Ebene der Klemmscheibe (11a) aufweisen.

2. Verbundelement nach Anspruch 1
**dadurch gekennzeichnet, dass**
eine Geometrie des Befestigungselementes (11) an eine zugehörige Geometrie des Montagedorns (13) angepasst ist.

3. Verbundelement nach Anspruch 1 oder 2
**dadurch gekennzeichnet, dass**
das erste Bauteil zusätzlich aus Metall, Guss oder Kunststoff gebildet ist.

4. Verbundelement nach einem der vorhergehenden Ansprüche
**dadurch gekennzeichnet, dass**
das erste Bauteil als Rinnenkörper und das zweite Bauteil als Abdeckung oder Zarge für eine Entwässerungsvorrichtung ausgebildet ist.

5. Verbundelement nach einem der vorhergehenden Ansprüche
**dadurch gekennzeichnet, dass**
das erste Bauteil als Lichtschachtkörper und das zweite Bauteil als Abdeckung oder Zarge für einen Lichtschacht ausgebildet ist.

6. Verbundelement nach einem der vorhergehenden Ansprüche
**dadurch gekennzeichnet, dass**
das Befestigungselement (11) in wenigstens eins der Bauteile integrierbar ist.

7. Verbundelement nach einem der vorhergehenden Ansprüche
**dadurch gekennzeichnet, dass**
das Befestigungselement (11) derart an den Bauteilen angeordnet ist, dass eine an einem ersten Bauteil angebrachte Dichtung, insbesondere aus einem elastischen Material, fixierbar ist.

## Claims

1. Composite element (10) for construction, in particular building construction or civil engineering, comprising at least two components and at least one fastening element (11) for connecting the components, wherein a first component has at least one, in particular cylindrical, assembly mandrel (13), and the fastening element (11) is designed as a clamping element such that it is connectable in a friction-locked manner to the assembly mandrel (13),
**characterized in that**
the first component is made of polymer concrete or concrete, in particular cement concrete, and a second component is made of metal, in particular steel, wherein the fastening element (11) is designed as a clamping washer (11a), in particular as an axle clamping ring, having a central recess (16) for receiving the assembly mandrel (13) and multiple clamping claws (17), wherein the clamping claws (17) have an angle in relation to a plane of the clamping washer (11a) in the state attached to the assembly mandrel (13).

2. Composite element as claimed in claim 1,
**characterized in that**
a geometry of the fastening element (11) is adapted to an associated geometry of the assembly mandrel (13).

3. Composite element as claimed in claim 1 or 2,
**characterized in that**
the first component is additionally made of metal, cast material, or plastic.

4. Composite element as claimed in any one of the preceding claims,
**characterized in that**
the first component is designed as a channel body and the second component is designed as a cover or frame for a drainage device.

5. Composite element as claimed in any one of the preceding claims,
**characterized in that**
the first component is designed as a light shaft body and the second component is designed as a cover or frame for a light shaft.

6. Composite element as claimed in any one of the preceding claims,
**characterized in that**
the fastening element (11) can be integrated into at least one of the components.

7. Composite element as claimed in any one of the preceding claims,
**characterized in that**
the fastening element (11) is arranged on the components such that a seal attached to a first component, in particular made of an elastic material, is fixable.

## Revendications

1. Élément composite (10) pour le génie civil, en particulier pour le bâtiment ou les travaux publics, comprenant au moins deux pièces et au moins un élément de fixation (11) pour l'assemblage des pièces, dont une première pièce comporte au moins un mandrin de montage (13), en particulier cylindrique, et l'élément de fixation (11) est conçu comme un élément de serrage, de façon à pouvoir être assemblé par friction avec le mandrin de montage (13), **caractérisé en ce que** la première pièce est faite en béton polymère ou en béton, en particulier en béton de ciment, et une deuxième pièce en métal, en particulier en acier, l'élément de fixation (11) étant conçu comme une rondelle de serrage (11a), en particulier comme une bague de serrage d'axe, avec un évidement central (16) destiné à recevoir le mandrin de montage (13) et plusieurs griffes de serrage (17), lesquelles griffes de serrage (17) forment, dans l'état monté sur le mandrin de montage (13), un angle par rapport à un plan de la rondelle de serrage (11a).

2. Élément composite selon la revendication 1, **caractérisé en ce qu'**une géométrie de l'élément de fixation (11) est adaptée à une géométrie correspondante du mandrin de montage (13).

3. Élément composite selon la revendication 1 ou 2, **caractérisé en ce que** la première pièce est faite en complément en métal, en fonte ou en matière plastique.

4. Élément composite selon l'une des revendications précédentes, **caractérisé en ce que** la première pièce est conçue comme un corps de rigole et la deuxième pièce comme une couverture ou un cadre pour un dispositif d'évacuation d'eau.

5. Élément composite selon l'une des revendications précédentes, **caractérisé en ce que** la première pièce est conçue comme un corps de puits de jour et la deuxième pièce comme une couverture ou un cadre pour un puits de jour.

6. Élément composite selon l'une des revendications précédentes, **caractérisé en ce que** l'élément de fixation (11) peut être intégré dans au moins une des pièces.

7. Élément composite selon l'une des revendications précédentes, **caractérisé en ce que** l'élément de fixation (11) est disposé sur les pièces de telle façon qu'une garniture d'étanchéité disposée sur la première pièce, en particulier faite d'un matériau élastique, puisse être fixée.
